# FASCICULE DE BREVET EUROPEEN

(11) **EP 0 878 328 B1**
(45) Date de publication et mention de la délivrance du brevet: **04.09.2002**
(21) Numéro de dépôt: 98401098.3
(22) Date de dépôt: 06.05.1998
(51) Int. Cl.: B60C 3/00, A01B 29/04

(54) **Pneumatique du type semi-creux et rouleau équipé de tels pneumatiques**
Halbhohlreifen und Walze mit solchen Reifen
Semi-tubular tyre and roller with such tyres

(30) Priorité: 14.05.1997 FR 9705922
(43) Date de publication de la demande: 18.11.1998
(73) Titulaire: Otico, 77650 Longueville (FR)
(72) Inventeur: Phely, Olivier, 77650 Sainte-Colombe (FR)
(74) Mandataire: Bezault, Jean

(56) Documents cités:
- EP-A- 0 401 592
- WO-A-94/12010
- DE-A- 19 540 933
- FR-A- 1 159 337
- FR-A- 2 694 864

## Description

L'invention concerne les pneumatiques à usages spéciaux et notamment ceux destinés à être utilisés pour des matériels agricoles, en particulier des rouleaux destinés à des machines combinés à des semoirs, à des outils de préparation du sol, etc.

L'invention concerne plus particulièrement un pneumatique du type semi-creux propre à être enfilé autour d'un tube central et à venir en appui jointif contre au moins un autre pneumatique analogue.

On connaît déjà, en particulier d'après le Brevet européen N° 0 401 592, un pneumatique dont la surface de roulement, à l'état non chargé du pneumatique, est relié aux flancs du pneumatique par une zone de transition en forme de U.

Ce pneumatique connu, qui n'est pas gonflé, a tendance à s'écraser à l'état chargé et, par conséquent, à offrir une surface de contact importante avec le sol, si bien qu'il convient essentiellement à une utilisation pour des rouleaux agricoles destinés à tasser le sol.

La demande de brevet FR-A-2 694 864 montre un pneumatique comprenant les caractéristiques du préambule de la revendication 1.

L'invention vise essentiellement à procurer un pneumatique du type défini en introduction qui convient tout particulièrement pour les rouleaux agricoles, tels que les rouleaux de semoirs, afin de créer des sillons dans un sol préalablement ameubli et permettre ainsi de disposer des graines ou semences dans les sillons résultant du passage du rouleau.

L'invention vise également à procurer un pneumatique de ce type qui permet de résister aux efforts importants qui s'exercent dans les zones de jonction des pneumatiques notamment lorsque le rouleau est déplacé sur un sol en pente ou en dévers, ou lorsque le rouleau subit une modification brusque de trajectoire, par exemple lors d'un demi-tour.

L'invention propose à cet effet un pneumatique du type défini en introduction, lequel comprend un fourreau central propre à être enfilé autour du tube central et possédant deux bords circulaires d'assemblage opposés et au moins une partie de roulement à profil en dôme comprenant une bande de roulement reliée au fourreau par deux flancs de manière à délimiter un espace annulaire creux de section transversale réduite par rapport à la section transversale du profil en dôme.

Le pneumatique de l'invention possède ainsi au moins un profil en dôme qui est susceptible de créer un sillon dans le sol, par exemple pour déposer ensuite des graines ou des semences.

Du fait de la forme en dôme et de la présence d'un espace annulaire creux de section transversale réduite par rapport à celle du profil en dôme, la partie de roulement du pneumatique ne s'affaisse pas trop, tout en possédant une souplesse suffisante pour permettre de subir des déformations.

D'autres caractéristiques complémentaires de l'invention sont les suivantes :
- les deux flancs forment entre eux un angle aigu compris entre 0 et 45°, de préférence entre 0 et 30°,
- le pneumatique comprend une seule partie de roulement,
- le pneumatique comprend deux parties de roulement espacées entre elles d'une distance choisie,
- le pneumatique comprend en outre un espace annulaire plat formé dans l'épaisseur du fourreau entre les deux parties de roulement,
- le pneumatique comprend en outre un espace annulaire formé dans l'épaisseur du fourreau à proximité d'un bord d'assemblage,
- la bande de roulement présente une surface extérieure incurvée ou sensiblement plate,
- la surface extérieure de la bande de roulement est lisse, rainurée ou crantée,
- l'un au moins des deux bords d'assemblage du fourreau est un bord droit,
- l'un au moins des deux bords d'assemblage du fourreau est un bord étagé,
- l'un des bords d'assemblage du fourreau est un bord mâle et l'autre est un bord femelle,
- les deux bord d'assemblage du fourreau sont tous deux des bords du type femelle,
- l'un des bords d'assemblage comprend une lèvre annulaire intérieure ou extérieure pour favoriser un contact étroit du fourreau et du type central dans la région dudit bord d'assemblage,
- le bord mâle comporte un côté incliné propre à appuyer contre un bossage d'un profil femelle pour exercer un déplacement radial interne du profil femelle lors de l'emboîtement mutuel du profil mâle et du profil femelle,
- l'un des bords d'assemblage comprend une lèvre annulaire intérieure ou extérieure pour favoriser un contact étroit du fourreau et du tube central dans la région dudit bord d'assemblage lorsque le fourreau est entouré d'une ceinture.

Sous un autre aspect, l'invention concerne un rouleau, en particulier un rouleau agricole, lequel comprend un tube central équipé d'un ou plusieurs pneumatiques selon l'invention, et des joues d'extrémité maintenant les pneumatiques en appui axial.

Avantageusement, ce rouleau comprend plusieurs ceintures entourant chacune les bords d'assemblage respectifs de deux pneumatiques adjacents.

Dans la description qui suit, faite seulement à titre d'exemple, on se réfère aux dessins annexés, sur lesquels :
- la figure 1 est une vue partiellement en coupe et partiellement en élévation d'un rouleau équipé de pneumatiques selon une première forme de réalisation de l'invention ;
- la figure 2 est une vue analogue à celle de la figure 1 pour une seconde forme de réalisation de l'invention ;
- la figure 3 est une vue partiellement en coupe et partiellement en élévation d'un rouleau équipé de pneumatiques selon une troisième forme de réalisation de l'invention ;
- la figure 4 est une vue partiellement en coupe et partiellement en élévation d'un rouleau équipé de pneumatiques selon une quatrième forme de réalisation de l'invention ;
- la figure 5 est une vue partiellement en coupe et partiellement en élévation d'un pneumatique à deux parties de roulement selon une cinquième forme de réalisation de l'invention ;
- la figure 6 est une vue partiellement en coupe et partiellement en élévation d'un rouleau équipé de pneumatiques selon la figure 5 ;
- la figure 7 est un détail montrant les bords respectifs de deux pneumatiques selon la figure 5 avant assemblage ;
- la figure 8 est une vue analogue à celle de la figure 7 après assemblage ;
- la figure 9 est un détail du bord femelle d'un pneumatique avant assemblage avec un pneumatique identique par l'intermédiaire d'un cerclage ;
- la figure 10 est un détail montrant l'assemblage de deux pneumatiques adjacents ayant des bords d'assemblage femelles ;
- la figure 11 est une vue d'extrémité d'un rouleau avant mise en place d'une joue ;
- la figure 12 est une vue analogue à la figure 5 dans une variante de réalisation ;
- la figure 13 est une vue analogue à celle de la figure 9 dans une variante de réalisation, avant mise en place du cerclage ; et
- la figure 14 est une vue analogue à la figure 13 après mise en place du cerclage.

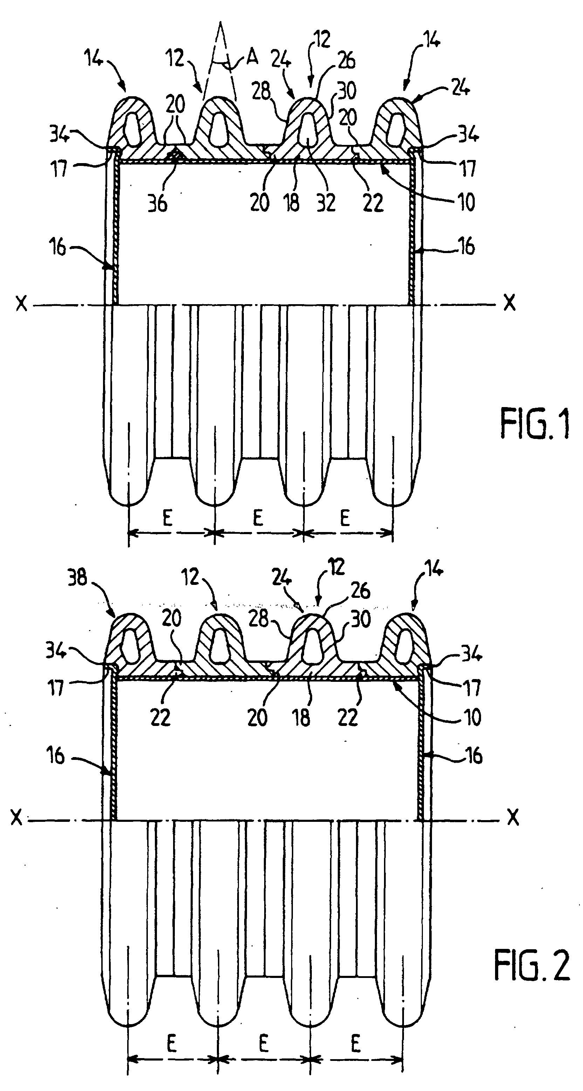

On se réfère tout d'abord à la figure 1 qui représenté un rouleau agricole, dans l'exemple un rouleau pour semoir, comprenant un tube central 10 monté à rotation autour d'un axe XX et autour duquel sont enfilés de façon jointive des pneumatiques 12 identiques. Ces pneumatiques 12 sont empilés les uns contre les autres et maintenus entre deux pneumatiques d'extrémité 14 qui sont identiques entre eux et présentent un profil légèrement différent de celui des pneumatiques 12.

Les pneumatiques sont maintenus axialement entre deux joues d'extrémité 16 de forme générale circulaire présentant un bord périphérique 17 plié et prenant appui contre un pneumatique 14. Les joues 16 sont fixées au tube 10 par des moyens appropriés (non représentés).

Chaque pneumatique 12 est réalisé à partir d'un matériau souple approprié, qui peut être soit un caoutchouc naturel, soit un ou plusieurs caoutchoucs synthétiques, soit encore un de leur mélange. De préférence, ce pneumatique n'est pas armé. Le pneumatique 12 comprend un fourreau central 18 propre à entourer le tube central 10 et possédant un diamètre interne légèrement supérieur au diamètre externe du tube 10 pour permettre un enfilement avec un jeu minimal et sans frottement.

Le fourreau central 18 possède deux bords d'assemblage opposés 20 et 22 constitués ici par des bords étagés de profil complémentaire. Ainsi, un bord 20 d'un pneumatique 12 est propre à s'emboîter dans un bord 22, de forme conjuguée, d'un autre pneumatique 12 disposé de façon jointive.

Le pneumatique 12 comprend une partie de roulement 24 qui constitue le pneumatique proprement dit et qui présente un profil en forme de dôme. La partie de roulement 24 comporte une bande de roulement 26, dans l'exemple de forme incurvée, reliée au fourreau 18 par deux flancs opposés 28, 30 de manière à délimiter un espace annulaire creux 32 de section transversale réduite par rapport à la section transversale du profil en dôme.

Dans l'exemple, les deux flancs 28 et 30 forment entre eux un angle aigu A qui est compris entre 0 et 45°, de préférence entre 0 et 30°. Dans l'exemple, cet angle est voisin de 15°.

Chacun des pneumatiques 12 est un pneumatique du type semi-creux, c'est-à-dire que l'espace annulaire creux 32 n'est pas gonflé mais peut communiquer avec le milieu ambiant au moyen d'un trou (non représenté) traversant l'épaisseur du fourreau 18.

Les pneumatiques d'extrémité 14 ont une forme voisine de celle des pneumatiques 12. Chacun d'eux comporte une partie de roulement 24 identique à celle des pneumatiques 12. Le fourreau 18 comporte un bord d'assemblage 20 analogue au bord d'assemblage 20 des pneumatiques 12. Toutefois; le bord d'assemblage 22 est supprimé et le fourreau 17 comporte un évidement 34 destiné à loger le bord 18 de la joue 16. On comprendra que le bord 20 du pneumatique d'extrémité 14 situé à la droite de la figure 1 s'emboîte directement avec le bord 22 du pneumatique 12 immédiatement adjacent.

Par contre, il existe un espace annulaire entre les bords d'assemblage 20 en vis-à-vis du pneumatique 14 situé à gauche de la figure 1 et du pneumatique 12 immédiatement adjacent. Cet espace est comblé par un joint 36 constitué d'un anneau qui est réalisé de préférence en caoutchouc, mais qui peut être aussi réalisé en matière plastique.

Les parties de roulement des pneumatiques 12 et 14 sont séparées deux à deux entre elles d'un espacement E correspondant à la distance entre deux sillons adjacents à former dans le sol.

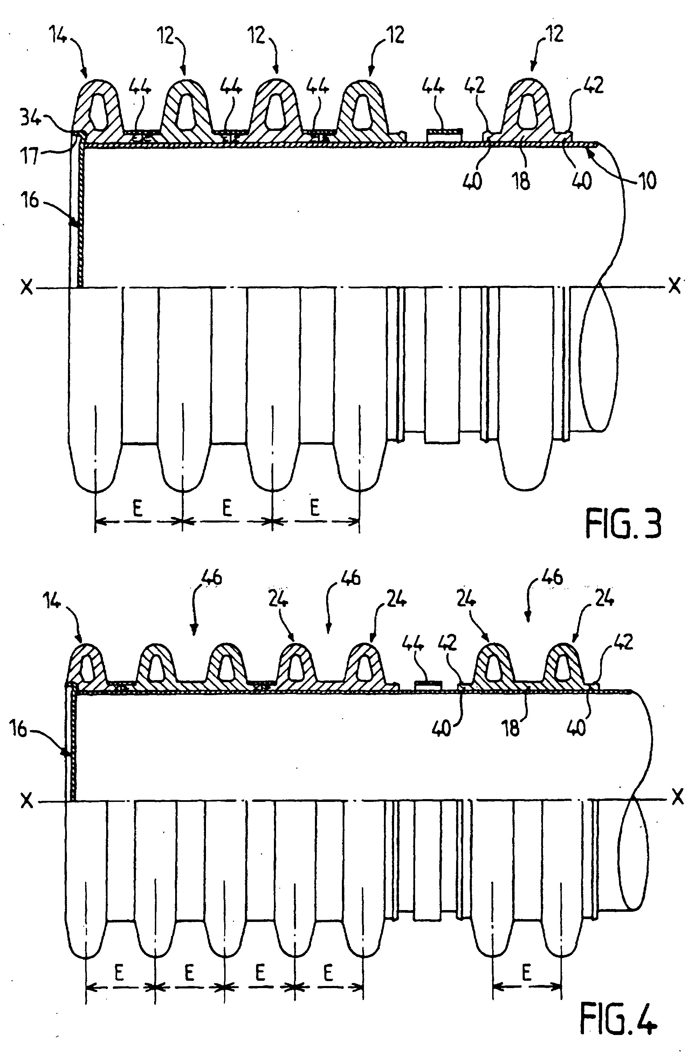

On se réfère maintenant à la figure 2 qui montre une variante de réalisation.

Dans cette variante, les pneumatiques 12 sont identiques aux pneumatiques 12 de la figure 1. Il en est de même pour le pneumatique 14 situé à droite de la figure 2.

Par contre, on prévoit un autre type de pneumatique d'extrémité 38 (à gauche de la figure 2) qui comprend un bord d'assemblage 22 analogue au bord d'assemblage 22 du pneumatique 12. Il en résulte que le bord 22 du pneumatique 38 peut s'emboîter directement dans le bord d'assemblage 22 du pneumatique 12 adjacent, sans qu'il soit nécessaire de prévoir un joint 36 comme montré à la figure 1.

Dans la forme de réalisation de la figure 3, à laquelle on se réfère maintenant, chacun des pneumatiques 12 a une structure voisine de celle du pneumatique 12 de la figure 1. La différence principale réside dans le fait que le fourreau 18 comporte deux bords d'assemblage 40 de structure droite, c'est-à-dire des bords qui ne sont pas susceptibles de s'emboîter l'un dans l'autre. Chaque bord d'assemblage 40 comporte une lèvre extérieure 42 à profil tronconique (voir partie droite de la figure 3) qui est susceptible d'être comprimée radialement (par effet de coin) sous la contrainte d'une ceinture 44 qui peut être réalisée en métal, en particulier en acier ou en aluminium, ou encore ne matière plastique.

La ceinture 44 est propre à entourer les bords d'assemblage respectifs 40 de deux pneumatiques 12 adjacents en assurant une compression radiale des lèvres 42 correspondantes, ce qui provoque un appui des bords d'assemblage 20 contre le tube central 10. Pour cela, la ceinture 44 possède un diamètre intérieur de valeur inférieure au diamètre extérieur de la lèvre 42 au niveau de son plus grand diamètre.

Lors de la mise en place des pneumatiques, on interpose à chaque fois une ceinture 44 qui vient assurer la compression radiale des bords d'assemblage 40. Pour faciliter le coulissement axial et l'emmanchement des ceintures 44, il est possible d'assurer un graissage en disposant un lubrifiant approprié sur chacune des lèvres 42 et/ou à l'intérieur de la ceinture 44.

Comme dans la forme de réalisation de la figure 1, on prévoit deux pneumatiques 14 d'extrémité qui sont identiques entre eux et qui comportent chacun un évidement 34 pour permettre de loger le bord périphérique 17 d'une joue 16.

Dans la forme de réalisation de la figure 4, à laquelle on se réfère maintenant, on prévoit des pneumatiques 46 qui comportent chacun deux parties de roulement 24 en forme de dôme, dépendant d'un manchon 18. Ces deux parties de roulement 24 sont identiques ou analogues à celles décrites précédemment et ménagent entre elles un espacement E correspondant à la distance de deux sillons à former dans le/sol. Là encore, les pneumatiques d'extrémité 14 sont identiques, et possèdent chacun une seule partie de roulement 24.

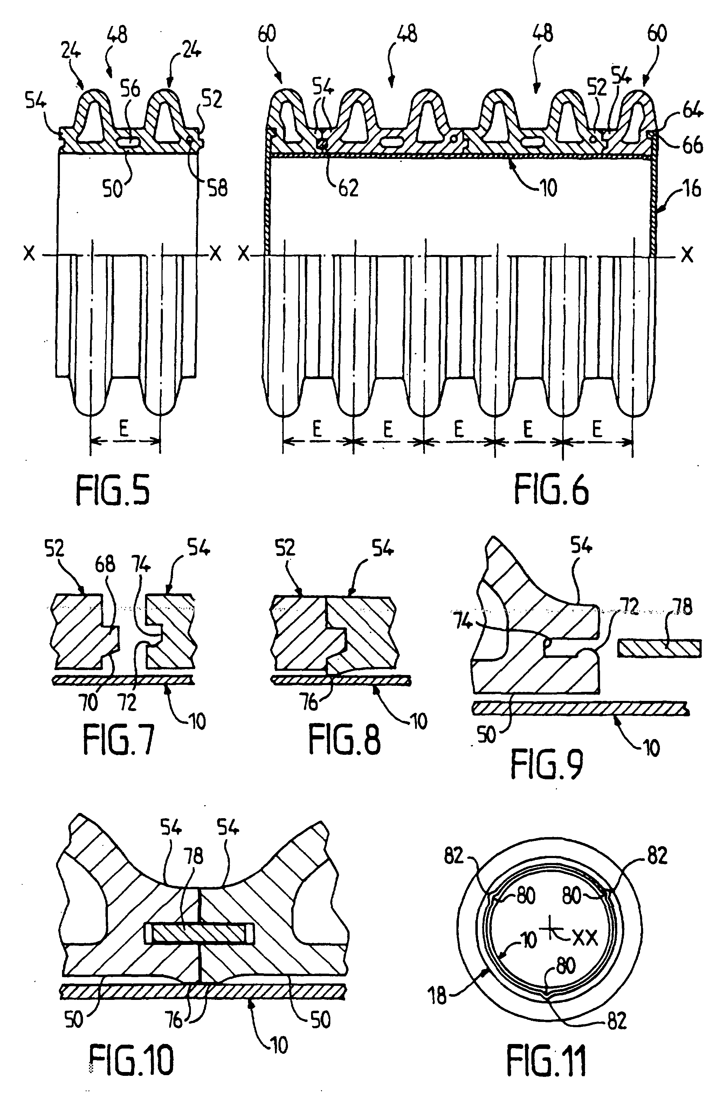

On se réfère maintenant à la forme de réalisation de la figure 5 qui montre un autre pneumatique 48 comprenant aussi deux parties de roulement 24 en forme de dôme, reliées à un fourreau 50. Ce dernier comporte deux bords d'assemblage opposés, à savoir un bord d'assemblage 52 du type mâle et un bord d'assemblage 54 du type femelle. Ainsi, un bord 52 d'un pneumatique est propre à s'emboîter dans un bord d'assemblage 54 d'un pneumatique adjacent comme montré à la figure 6. Dans le cas de la figure 5, le fourreau 50 possède une épaisseur plus grande que le fourreau 18 des formes de réalisations précédentes. Le pneumatique 48 comprend un espace annulaire plat 56 formé dans l'épaisseur du fourreau 50 entre les deux parties de roulement 12, de manière à conférer une certaine souplesse à la partie du fourreau comprise entre les deux parties de roulement 12.

Par ailleurs, le pneumatique comprend un autre espace annulaire 58 formé dans l'épaisseur du fourreau 50 à proximité du bord d'assemblage 52 du type mâle. Cet espace annulaire 58 a la forme d'un tore et permet lui aussi de donner une certaine souplesse au bord d'assemblage 52.

Il est en effet intéressant que les parties du pneumatique comprises entre les parties de roulement 24 puissent se déformer quelque peu pour faciliter le décollement de la terre qui, sinon, aurait tendance à adhérer au pneumatique entre les parties de roulement.

Comme montré à la figure 6, le rouleau est équipé en outre de deux pneumatiques d'extrémité 60, identiques comprenant chacun un bord d'assemblage 54 de type femelle. Il en résulte que le pneumatique d'extrémité 60 situé à droite de la figure 6 peut s'emboîter directement par son bord d'assemblage 54 de type femelle dans le bord d'assemblage 52 de type mâle du pneumatique 60 qui lui est adjacent.

Par contre, pour le pneumatique d'extrémité 60 situé à gauche de la figure 6, il est nécessaire de prévoir entre ce pneumatique d'extrémité et le pneumatique 48 adjacent un joint 62 venant se loger dans les deux bords femelles 54 en vis-à-vis.

Chacun des pneumatiques d'extrémité 60 comporte une gorge périphérique 64 destinée à recevoir une bordure périphérique 66 d'une joue 16.

Comme montré à la figure 7, le bord d'assemblage mâle 52 comprend une partie 68 formant tenon munie d'un côté incliné 70 propre à appuyer contre un bossage 72 prévu à l'entrée d'une gorge 74 de la partie femelle 54. Il en résulte que, lorsque deux pneumatiques adjacents sont rapprochés l'un de l'autre, le côté incliné 70 vient appuyer sur le bossage 72 pour le déformer radialement vers l'intérieur, ce qui provoque une déformation d'une lèvre intérieure 76 du bord femelle, qui vient ainsi en appui contre l'extérieur du tube central 10, comme montré à la figure 8. Ceci facilite le serrage et l'étanchéité des pneumatiques autour du tube central.

Dans la forme de réalisation des figures 9 et 10, à laquelle on se réfère maintenant, le fourreau 50 d'un pneumatique 18 comporte deux bords d'assemblage femelles 54. Il en résulte qu'il est nécessaire d'insérer, lors du montage, un cerclage 78, de préférence en métal, pour combler l'espace formé entre les deux bords d'assemblage femelles.

L'entrée de la gorge femelle 74 comporte un bossage 72 (figure 9) analogue à celui décrit précédemment. Après assemblage des deux pneumatiques, il se forme deux lèvres 76 qui viennent appuyer contre le tube 10 (figure 10).

Dans la forme de réalisation de la figure 11, à laquelle on se réfère maintenant, le rouleau comporte des moyens pour faciliter le maintien, sans rotation, des pneumatiques autour du tube central 10.

Celui-ci est muni à cet effet d'une ou plusieurs nervures axiales 80 parallèles à l'axe XX qui coopèrent avec des rainures homologues 82 prévues à l'intérieur du fourreau 18 de chaque pneumatique.

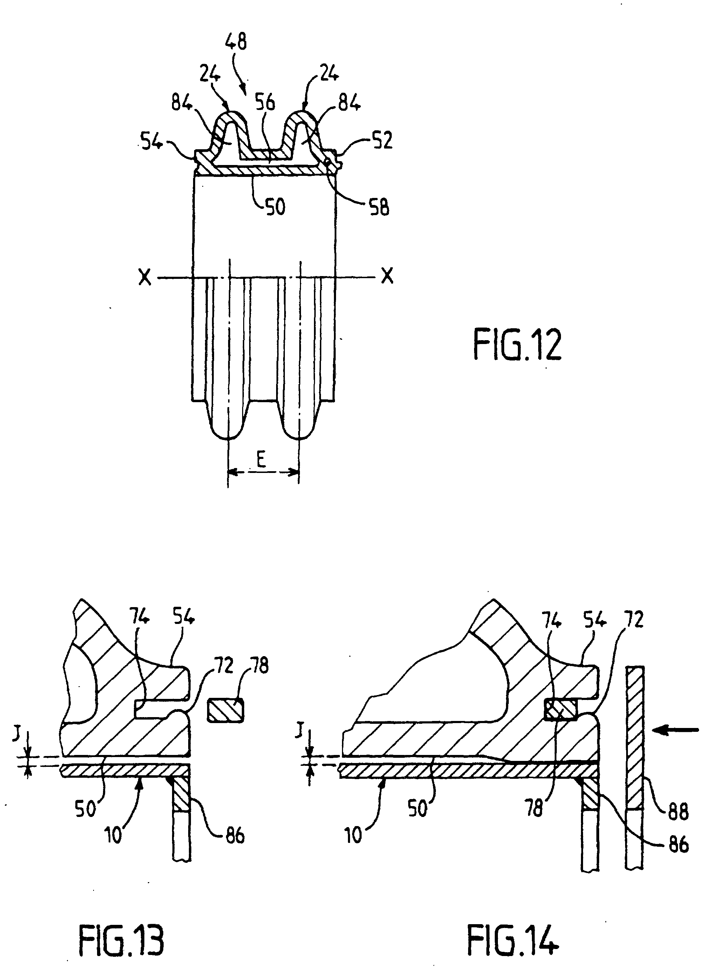

Dans la variante de la réalisation de la figure 12, le pneumatique 48 présente une structure proche de celle du pneumatique 48 de la figure 5. La principale différence réside dans le fait que l'espace annulaire plat 56 communique ici avec les espaces intérieurs respectifs 84 des deux parties de roulement 24. Il en résulte que le pneumatique possède une seule et même chambre creuse à l'intérieur, à la place de trois chambres creuses dans le cas de la figure 5.

On se réfère maintenant aux figures 13 et 14 qui représentent une variante de réalisation de la figure 9 dans le cas d'un pneumatique d'extrémité. Le tube 10 s'arrête au droit du pneumatique et il est muni d'un anneau intérieur 86 destiné à fournir une butée axiale pour un disque d'extrémité 88 (figure 14) mis en place ultérieurement.

La gorge 74 ménagée dans le bord d'assemblage femelle 54 reçoit ici un cerclage 78, encore appelé virole, de préférence en acier, qui est moins large que le cerclage 78 représenté à la figure 9. En effet, dans le cas des figures 13 et 14, ce cerclage 78 est destiné à être placé dans un pneumatique d'extrémité, et non pas à assurer une liaison entre deux pneumatiques adjacents. Après mise en place du cerclage 78 dans la gorge 74, ce cerclage est retenu par le bossage 72 formant lèvre de retenue (figure 14).

Avant mise en place du cerclage 78, il existe un jeu J (figure 13) compris entre l'extérieur du tube 10 et l'intérieur du fourreau 50, sur toute la longueur axiale de ce dernier.

Après mise en place du cerclage 78, le bord d'assemblage 54 se trouve serré contre l'extrémité du tube 50, comme on peut le voir sur la figure 14.

Ainsi, le cerclage 78, qui est totalement noyé dans le pneumatique joue un rôle de tringle, c'est-à-dire que ce cerclage empêche la dilatation circonférentielle du pneumatique au travail, tout en laissant une surface de frottement et d'appui permettant de comprimer tous les pneumatiques par l'intermédiaire du disque d'extrémité 88, qui est lisse dans ce cas.

En effet, après mise en place des pneumatiques autour du tube 10 et mise en place des cerclages d'extrémité, il suffit de placer, à chaque extrémité, un disque 88 comme montré à la figure 14.

Du fait que le jeu J est annulé dans la région du bord d'assemblage d'un pneumatique d'extrémité, on crée une adhérence circonférentielle qui retient les mouvements latéraux des pneus en virage, lorsque le rouleau ripe axialement.

Les pneumatiques de l'invention peuvent être réalisés en différentes dimensions, typiquement avec des diamètres extérieurs compris entre 250 et 800 mm et pouvant s'adapter autour de tubes, standards ou non, possédant des diamètres pouvant être compris par exemple entre 200 et 700 mm. L'écartement ou espace entre deux parties de roulement d'un même pneumatique ou de deux pneumatiques adjacents sera choisi pour correspondre à la largeur souhaitée entre deux sillons. La valeur de cette distance pourra par exemple être comprise entre 60 mm et 200 mm, étant à noter que la valeur standard est généralement de 125 mm. En outre, la hauteur du dôme de chaque partie de roulement, à partir du fourreau, pourra prendre différentes valeurs et être comprise généralement entre 30 mm pour les rouleaux de plus faible diamètre et 150 mm pour les rouleaux de plus grand diamètre.

Bien entendu, l'invention n'est pas limitée aux formes de réalisation décrites précédemment à titre d'exemple et s'étend à d'autres variantes.

On comprendra qu'il est possible de réaliser des pneumatiques comprenant une ou plusieurs parties de roulement et que la forme du dôme peut être adaptée en fonction de différents critères liés à l'utilisation du rouleau.

Il est possible, quelle que soit la nature des bords d'assemblage du fourreau, d'associer ou non un cerclage pour contribuer au maintien des pneumatiques autour du tube central.

L'invention trouve une application particulière aux rouleaux à usage agricole, en particulier aux rouleaux pour semoirs agricoles, pour permettre de réaliser des sillons destinés à recevoir des graines ou semences.

Ces rouleaux peuvent être également utilisés pour rappuyer le sol après semis.

Ils peuvent aussi être utilisés seuls ou en combinaison avec un semoir ou un outil de préparation du sol, animé ou non-animé.

## Revendications

1. Pneumatique du type semi-creux, propre à être enfilé autour d'un tube central et à venir en appui jointif contre au moins un autre pneumatique analogue,
comprenant un fourreau central (18 ; 50) propre à être enfilé autour du tube central (10) et possédant deux bords circulaires d'assemblage opposés (20, 22 ; 52, 54), **caractérisé en ce qu'**il comprend au moins une partie de roulement (24) à profil en dôme comportant une bande de roulement (26) reliée au fourreau (18 ; 50) par deux flancs (28 ; 30) de manière à délimiter un espace annulaire creux (32) de section transversale réduite par rapport à la section transversale du profil en dôme.

2. Pneumatique selon la revendication 1, **caractérisé en ce que** les deux flancs (28, 30) forment entre eux un angle aigu (A) compris entre 0 et 45°, de préférence entre 0 et 30°.

3. Pneumatique selon l'une des revendications 1 et 2, **caractérisé en ce qu'**il comprend une seule partie de roulement (24),

4. Pneumatique selon l'une des revendications 1 et 2, **caractérisé en ce qu'**il comprend deux parties de roulement (24) espacées entre elles d'une distance choisie (E).

5. Pneumatique selon la revendication 4, **caractérisé en ce qu'**il comprend en outre un espace annulaire plat (56) formé dans l'épaisseur du fourreau (50) entre les deux parties de roulement.

6. Pneumatique selon l'une des revendications 1 à 5, **caractérisé en ce qu'**il comprend en outre un espace annulaire (58) formé dans l'épaisseur du fourreau (50) à proximité d'un bord d'assemblage (52).

7. Pneumatique selon l'une des revendications 1 à 6, **caractérisé en ce que** la bande de roulement présente une surface extérieure incurvée ou sensiblement plate.

8. Pneumatique selon l'une des revendications 1 à 7, **caractérisé en ce que** la surface extérieure de la bande de roulement est lisse, rainurée ou crantée.

9. Pneumatique selon l'une des revendications 1 à 8, **caractérisé en ce que** l'un au moins des deux bords d'assemblage (40) du fourreau est un bord droit.

10. Pneumatique selon l'une des revendications 1 à 8, **caractérisé en ce que** l'un au moins des deux bords d'assemblage (40) du fourreau (18) est un bord étagé.

11. Pneumatique selon l'une des revendications 1 à 8, **caractérisé en ce que** l'un au moins des bords d'assemblage (52) du fourreau (50) est un bord mâle et l'autre est un bord femelle (54).

12. Pneumatique selon l'une des revendications 1 à 8, **caractérisé en ce que** les deux bords d'assemblage du fourreau sont des bords d'assemblage femelles (54).

13. Pneumatique selon l'une des revendications 1 à 12, **caractérisé en ce que** l'un des bords d'assemblage comprend une lèvre annulaire intérieure ou extérieure (42) pour favoriser un contact étroit du fourreau et du tube central dans la région dudit bord d'assemblage lorsque le fourreau est entouré d'une ceinture (44).

14. Pneumatique selon la revendication 11, **caractérisé en ce que** le bord mâle (52) comporte un côté incliné (70) propre à appuyer contre un bossage (62) d'un profil femelle pour exercer un déplacement radial intérieur du profil femelle lors de l'emboîtement mutuel du profil mâle et du profil femelle.

15. Rouleau, en particulier rouleau agricole, **caractérisé en ce qu'**il comprend un tube central (10) équipé d'un ou plusieurs pneumatiques selon l'une des revendications 1 à 14 et de joues d'extrémité (16) maintenant les pneumatiques en appui axial.

16. Rouleau selon la revendication 15, **caractérisé en ce qu'**il comprend plusieurs ceintures (44) entourant chacune les bords d'assemblage respectifs de deux pneumatiques adjacents.

## Claims

1. A tyre of semi-hollow type intended to be fitted around a central tube and to come into contiguous contact against at least one other similar tyre, comprising a central sleeve (18; 50) for being fitted around the central tube (10) and having two opposite circular assembly edges (20, 22; 52, 54), **characterised in that** it comprises at least one tread portion (24) of dome-shaped profile comprising a tread (26) connected to the sleeve (18; 50) by two sides (28; 30) so as to delimit a hollow annular space (32) of reduced cross-section with respect to the cross-section of the dome-shaped profile.

2. A tyre according to claim 1 **characterised in that** the two sides (28, 30) form between them an acute angle (A) of between 0 and 45°, preferably between 0 and 30°.

3. A tyre according to one of claims 1 and 2 **characterised in that** it comprises a single tread portion (24).

4. A tyre according to one of claims 1 and 2 **characterised in that** it comprises two tread portions (24) spaced from each other by a selected distance (E).

5. A tyre according to claim 4 **characterised in that** it further comprises a flat annular space (56) formed in the thickness of the sleeve (50) between the two tread portions.

6. A tyre according to one of claims 1 to 5 **characterised in that** it further comprises an annular space (58) formed in the thickness of the sleeve (50) in the proximity of an assembly edge (52).

7. A tyre according to one of claims 1 to 6 **characterised in that** the tread has a curved or substantially flat external surface.

8. A tyre according to one of claims 1 to 7 **characterised in that** the external surface of the tread is smooth, grooved or notched.

9. A tyre according to one of claims 1 to 8 **characterised in that** one at least of the two assembly edges (40) of the sleeve is a straight edge.

10. A tyre according to one of claims 1 to 8 **characterised in that** one at least of the two assembly edges (40) of the sleeve is a stepped edge.

11. A tyre according to one of claims 1 to 8 **characterised in that** one at least of the assembly edges (52) of the sleeve (50) is a male edge and the other is a female edge (54).

12. A tyre according to one of claims 1 to 8 **characterised in that** the two assembly edges of the sleeve are female assembly edges (54).

13. A tyre according to one of claims 1 to 12 **characterised in that** one of the assembly edges comprises an internal or external annular lip (42) to promote close contact of the sleeve and the central tube in the region of said assembly edge when the sleeve is surrounded by a belt (44).

14. A tyre according to claim 11 **characterised in that** the male edge (52) comprises an inclined side (70) capable of bearing against a boss (72) of a female profile to implement inward radial displacement of the female profile upon mutual interengagement of the male profile and the female profile.

15. A roller, in particular an agricultural roller, **characterised in that** it comprises a central tube (10) equipped with one or more tyres according to one of claims 1 to 14 and end plates (16) holding the tyres in a condition of axial support.

16. A roller according to claim 15 **characterised in that** it comprises a plurality of belts (44) each surrounding the respective assembly edges of two adjacent tyres.

## Patentansprüche

1. Halbhohlreifen, der zum Aufziehen auf ein zentrales Rohr und zur verbundenen Anlage an wenigstens einen vergleichbaren Reifen geeignet ist, enthaltend einen zentralen Mantel (18; 50), der dazu geeignet ist, auf ein zentrales Rohr (10) aufgezogen zu werden, und der zwei gegenüberliegende, kreisförmige Montageränder (20, 22; 52, 54) hat, **dadurch gekennzeichnet, daß** er wenigstens einen Rollabschnitt (24) mit domförmigen Profil aufweist, der ein Rollband (26) hat, das mit dem Mantel (18; 50) durch zwei Flanken (28; 30) so verbunden ist, daß ein ringförmiger Hohlraum (32) eines Querschnitts gebildet wird, der gegenüber dem Querschnitt des domförmigen Profils vermindert ist.

2. Reifen nach Anspruch 1, **dadurch gekennzeichnet, daß** die zwei Flanken (28, 30) miteinander einen spitzen Winkel (A) bilden, der zwischen 0° und 45° und vorzugsweise zwischen 0° und 30° liegt.

3. Reifen nach einem der Ansprüche 1 und 2, **dadurch gekennzeichnet, daß** er einen einzigen Rollabschnitt (24) aufweist.

4. Reifen nach einem der Ansprüche 1 und 2, **dadurch gekennzeichnet, daß** er zwei Rollabschnitte (24) aufweist, die einen gewählten Teilungsabstand (E) haben.

5. Reifen nach Anspruch 4, **dadurch gekennzeichnet, daß** er weiterhin einen ringförmigen, flachen Hohlraum (56) aufweist, der in der Dicke des Mantels (50) zwischen zwei Rollabschnitten ausgebildet ist.

6. Reifen nach einem der Ansprüche 1 bis 5, **dadurch gekennzeichnet, daß** er weiterhin einen ringförmigen Hohlraum (56) aufweist, der in der Dicke des Reifens (50) nahe einem Montagerand (52) ausgebildet ist.

7. Reifen nach einem der Ansprüche 1 bis 6, **dadurch gekennzeichnet, daß** das Rollband eine nach innen gebogene oder im wesentlichen flache Außenfläche aufweist.

8. Reifen nach einem der Ansprüche 1 bis 7, **dadurch gekennzeichnet, daß** die Außenfläche des Rollbandes glatt, gerillt oder formgezahnt ist.

9. Reifen nach einem der Ansprüche 1 bis 8, **dadurch gekennzeichnet, daß** wenigstens einer der Montageränder (40) des Mantels ein ebener Rand ist.

10. Reifen nach einem der Ansprüche 1 bis 8, **dadurch gekennzeichnet, daß** wenigstens einer der beiden Montageränder (40) des Mantels (18) ein abgestufter Rand ist.

11. Reifen nach einem der Ansprüche 1 bis 8, **dadurch gekennzeichnet, daß** wenigstens einer der Montageränder (52) des Mantels (50) ein Einsteckrand und der andere ein Aufnahmerand (54) ist.

12. Reifen nach einem der Ansprüche 1 bis 8, **dadurch gekennzeichnet, daß** die zwei Montageränder des Mantels Aufnahme-Montageränder (54) sind.

13. Reifen nach einem der Ansprüche 1 bis 12, **dadurch gekennzeichnet, daß** einer der Montageränder eine innere oder äußere ringförmige Lippe (42) aufweist, um einen engen Kontakt des Mantels und des zentralen Rohres im Bereich des genannten Montagerandes zu begünstigen, wenn der Mantel von einem Gürtel (44) umschlungen ist.

14. Reifen nach Anspruch 11, **dadurch gekennzeichnet, daß** der Einsteckrand (52) eine geneigte Flanke (70) aufweist, die zur Anlage an einer Wulst (62) eines Aufnahmeprofils geeignet ist, um beim gegenseitigen Ineinanderfügen des Einsteckprofils und des Aufnahmeprofils eine radiale Verstellung des Aufnahmeprofils nach innen hervorzubringen.

15. Walze, insbesondere landwirtschaftliche Walze, **dadurch gekennzeichnet, daß** sie ein zentrales Rohr (10) aufweist, das mit einem oder mehreren Reifen nach einem der Ansprüche 1 bis 14 und mit Seitenteilen (16) versehen ist, die die Reifen in axialer Anlage halten.

16. Walze nach Anspruch 15, **dadurch gekennzeichnet, daß** sie mehrere Gürtel (44) aufweist, die jeweils die Montageränder zweier benachbarter Reifen umgeben.
